# EUROPÄISCHE PATENTSCHRIFT

(11) **EP 3 478 530 B1**
(45) Veröffentlichungstag und Bekanntmachung des Hinweises auf die Patenterteilung: **22.03.2023**
(21) Anmeldenummer: 17723057.0
(22) Anmeldetag: 09.05.2017
(51) Int. Cl.: B60L 53/63, B60L 53/64

(54) **VERFAHREN ZUR STEUERUNG DES ELEKTRISCHEN LADENS EINER GRUPPE VON FAHRZEUGEN, IM FALLE VON LEISTUNGSREDUKTION**
METHOD FOR CONTROLLING THE ELECTRIC CHARGING PROCESS OF A GROUP OF VEHICLES IN THE EVENT OF A POWER REDUCTION
PROCÉDÉ DE COMMANDE DE CHARGE ÉLECTRIQUE D'UN GROUPE DE VÉHICULES DANS LE CAS DE LA RÉDUCTION DE PUISSANCE

(30) Priorität: 04.07.2016 DE 102016212135
(43) Veröffentlichungstag der Anmeldung: 08.05.2019
(73) Patentinhaber: Bayerische Motoren Werke Aktiengesellschaft, 80809 München (DE)
(72) Erfinder: MARCIAL-SIMON, Enrique, 97209 Veitshöchheim (DE); MEHLHORN, Rainer, 85652 Landsham (DE); PFAB, Xaver, 85570 Herdweg (DE); STAUNER, Thomas, 85716 Unterschleissheim (DE)
(86) Internationale Anmeldenummer: PCT/EP2017/061017
(87) Internationale Veröffentlichungsnummer: WO 2018/007051

(56) Entgegenhaltungen:
- US-A1- 2010 017 249
- US-A1- 2013 002 188
- US-A1- 2014 184 156
- US-A1- 2015 077 054

## Beschreibung

Die Erfindung betrifft ein Verfahren zur Steuerung des elektrischen Ladens einer Gruppe von Fahrzeugen sowie ein entsprechendes Steuersystem.

Aus dem Stand der Technik ist es bekannt, das Laden der Energiespeicher einer Gruppe bzw. eines Pools von elektrisch antreibbaren Fahrzeugen über ein Steuersystem derart zu steuern, dass auch Anforderungen des Betreibers des zum Laden verwendeten Stromnetzes im Hinblick auf eine Leistungsreduktion berücksichtigt werden. Hierbei wird von dem Steuersystem ein Leistungsreduktionsvorgang gemäß einem Reduktionsschema durchgeführt, welches eine Reduktion der Ladeleistung des Ladevorgangs der Energiespeicher von Fahrzeugen des Fahrzeugpools durch temporäres Aussetzen des Ladevorgangs spezifiziert. Ohne Initialisierung eines Leistungsreduktionsvorgangs sind für das Laden der Energiespeicher der einzelnen Kraftfahrzeuge einzuhaltende Parameter vorgegeben. Für Fahrzeuge, die an einem Leistungsreduktionsvorgang teilnehmen, kann von diesen Parametern des Ladevorgangs gegebenenfalls abgewichen werden.

In der Regel kann zumindest ein Teil der Parameter des Ladevorgangs des Energiespeichers eines Fahrzeugs durch einen zugeordneten Benutzer über eine Benutzerschnittstelle manuell verändert werden. Da es der Nutzer eines Fahrzeugs unter Umständen nicht wünscht, dass von diesen Parametern abgewichen wird, ist es aus dem Stand der Technik bekannt, dass der Nutzer die Teilnahme seines Fahrzeugs an einem Leistungsreduktionsvorgang sperren kann (sog. Opt-out). Darüber hinaus kann der Fall auftreten, dass während oder kurz vor der Durchführung eines Leistungsreduktionsvorgangs die Parameter eines an diesem Vorgang teilnehmenden Fahrzeugs durch den Nutzer verändert werden. Herkömmlicherweise hat dies zur Konsequenz, dass das betreffende Fahrzeug dann nicht mehr an dem Leistungsreduktionsvorgang teilnimmt. Dies hat jedoch den Nachteil, dass aufgrund des Wegfalls des Fahrzeugs das Reduktionsschema für den Leistungsreduktionsvorgang wieder neu berechnet werden muss, wofür Rechenressourcen in dem zentralen Steuersystem benötigt werden.

Üblicherweise werden Nutzer von Kraftfahrzeugen für die Teilnahme an entsprechenden Leistungsreduktionsvorgängen über ein Belohnungssystem belohnt. Zum Beispiel können die Nutzer hierfür monetäre Vergünstigungen erhalten. Wie bereits oben erwähnt, fällt das Fahrzeug eines Nutzers derzeit jedoch automatisch aus der Teilnahme an einem Leistungsreduktionsvorgang heraus, wenn der Nutzer manuell Parameter des Ladevorgangs bei einem bevorstehenden bzw. bereits begonnenen Leistungsreduktionsvorgang verändert. Der Nutzer hat somit keine Anreize, manuelle Veränderungen von Parametern des Ladevorgangs für sein Fahrzeug derart zu wählen, dass sein Fahrzeug weiterhin am Leistungsreduktionsvorgang teilnimmt.

Die Druckschrift US 2014/0184156 A1 beschreibt ein System und ein Verfahren zum Laden von Batterien von Fahrzeugen und zur Rückführung von Ladung von Batterien zu Stromnetzbetreibern. Dabei werden Ladeparameter zum Laden der Batterie eines Fahrzeugs an den Stromnetzbetreiber übermittelt, wobei ein Nutzer gegebenenfalls interaktiv alternative Ladeparameter mit dem Stromnetzbetreiber aushandeln kann.

Die Druckschrift US 2015/0077054 A1 offenbart ein System und ein Verfahren, um eine elektrische Fahrzeugbatterie zu laden. Dabei werden Ladeinstruktionen basierend auf einem früheren Ladeprofil, einem vorhergesagten Ladeprofil, früheren Wetterdaten und/oder vorhergesagten Wetterdaten erzeugt, wenn Echtzeit-Informationen zum Zustand des Stromnetzes nicht verfügbar sind.

Aufgabe der Erfindung ist es, die Steuerung des elektrischen Ladens einer Gruppe von Fahrzeugen mit der Möglichkeit eines Leistungsreduktionsvorgangs einfacher auszugestalten.

Diese Aufgabe wird durch das Verfahren gemäß Patentanspruch 1 bzw. das Steuersystem gemäß Patentanspruch 7 gelöst. Weiterbildungen der Erfindung sind in den abhängigen Ansprüchen definiert.

Das erfindungsgemäße Verfahren dient zur Steuerung des elektrischen Ladens einer Gruppe von Fahrzeugen, welche elektrisch an ein Stromnetz eines Stromnetzbetreibers angeschlossen sind, wobei die jeweiligen Fahrzeuge aus dem Stromnetz Strom zum Laden eines fahrzeugseitigen Energiespeichers zum Antrieb des jeweiligen Fahrzeugs beziehen. Mit anderen Worten sind die Fahrzeuge elektrisch antreibbare Fahrzeuge, wie z.B. reine Elektrofahrzeuge oder Hybridfahrzeuge. In dem erfindungsgemäßen Verfahren sind vorab ein oder mehrere einzuhaltende Parameter des Ladevorgangs des fahrzeugseitigen Energiespeichers der jeweiligen Fahrzeuge festgelegt. Dabei kann ein Nutzer eines jeweiligen Fahrzeugs über eine jeweilige Benutzerschnittstelle zumindest einen Teil dieser Parameter verändern. Bevorzugte Ausführungsformen der genannten Parameter werden weiter unten beschrieben. Unter anderem können die Parameter z.B. eine gewünschte Abfahrtszeit des Fahrzeugs oder ein Zeitfenster spezifizieren, in dem das Laden des entsprechenden Fahrzeugs stattfinden soll.

In dem erfindungsgemäßen Verfahren kann ein zentrales Steuersystem mit den jeweiligen Fahrzeugen der Gruppe sowie mit einem Server des Stromnetzbetreibers kommunizieren. Unter einem zentralen Steuersystem ist dabei ein Steuersystem bzw. eine Steuereinrichtung zu verstehen, welche das Laden aller Fahrzeuge der Gruppe steuert. Dieses Steuersystem ist insbesondere über Software auf einem entsprechenden Server realisiert. Die einzuhaltenden Parameter bzw. eine Veränderung dieser Parameter sind dabei dem zentralen Steuersystem bekannt. Zum Beispiel werden sie über eine drahtlose Kommunikationsschnittstelle, die an die obige Benutzerschnittstelle angebunden ist, an das zentrale Steuersystem übermittelt.

In dem erfindungsgemäßen Verfahren führt das zentrale Steuersystem in Antwort auf einen empfangenen Reduktionsbefehl einen Leistungsreduktionsvorgang gemäß einem Reduktionsschema durch. Im Falle, dass nach Empfang des obigen Reduktionsbefehls und vor oder während des darauf basierenden Leistungsreduktionsvorgangs der Ladevorgang des Energiespeichers zumindest eines vorgegebenen Fahrzeugs mittels Änderung zumindest eines seiner Parameter durch den Nutzer verändert wird, überprüft das zentrale Steuersystem im Rahmen des erfindungsgemäßen Verfahrens, ob ein vorgegebenes Kriterium erfüllt ist. Sofern nicht anders vermerkt, ist hier und im Folgenden unter dem zumindest einen vorgegebenen Fahrzeug ein solches Fahrzeug zu verstehen, bei dem vor oder während des Leistungsreduktionsvorgangs Parameter des Ladevorgangs verändert werden. Erfindungsgemäß wird somit durch das zentrale Steuersystem überprüft, ob die Einhaltung einer vom Nutzer spezifizierten Parameterveränderung negative Auswirkungen auf den Leistungsreduktionsvorgang in dem Sinne hat, dass nicht mehr durchgehend die erwünschte Leistungsreduktion gemäß dem Leistungsbetrag des empfangenen Reduktionsbefehls erreicht wird.

Falls das obige vorgegebene Kriterium erfüllt ist, d.h. wenn die Einhaltung der Parameter für das zumindest eine vorgegebene Fahrzeug keine negativen Auswirkungen auf den Leistungsreduktionsvorgang hat, wird durch das zentrale Steuersystem der Leistungsreduktionsvorgang gemäß dem Reduktionsschema unter Teilnahme des zumindest einen vorgegebenen Fahrzeugs an dem Leistungsreduktionsvorgang und unter Einhaltung des oder der Parameter des veränderten Ladevorgangs begonnen oder fortgesetzt.

Das erfindungsgemäße Verfahren weist den Vorteil auf, dass bei manuellen Parameterveränderungen von Ladevorgängen ein bereits berechnetes Reduktionsschema aufrecht erhalten werden kann, sofern die veränderten Parameter keine negativen Auswirkungen auf den Leistungsreduktionsvorgang derart haben, dass bei Einhaltung dieser Parameter die erwünschte Leistungsreduktion durchgehend nicht erreicht werden kann. Die Veränderung von Parametern führt somit nicht zwangsweise zur Berechnung eines neuen Reduktionsschemas, wodurch Rechenressourcen im zentralen Steuersystem gespart werden. Darüber hinaus kann in Kombination mit einem Belohnungssystem, bei dem ein Nutzer für die Teilnahme an einem Leistungsreduktionsvorgang belohnt wird, das Nutzerverhalten positiv beeinflusst werden, da Nutzer einen Anreiz haben, bei der manuellen Veränderung von Parametern des Ladevorgangs für ihr Fahrzeug darauf zu achten, dass die Parameterveränderung nicht dazu führt, dass das Fahrzeug nicht mehr an dem Leistungsreduktionsvorgang teilnimmt.

Gemäß einer vorteilhaften Ausgestaltung kann der Reduktionsbefehl dabei vom Server des Stromnetzbetreibers stammen und einen Leistungsbetrag festlegen, um den die Leistungsaufnahme der Gruppe von Fahrzeugen aus dem Stromnetz zu vermindert ist. Das Reduktionsschema kann von dem zentralen Steuersystem basierend auf dem Leistungsbetrag des Reduktionsbefehls ermittelt bzw. berechnet werden. Dieses ermittelte bzw. berechnete Reduktionsschema kann eine temporäre Reduktion der Ladeleistung des Ladevorgangs des Energiespeichers von einem oder mehreren vorgegebenen Fahrzeugen der Gruppe spezifizieren, so dass die Verminderung der Leistungsaufnahme der Gruppe von Fahrzeugen um den Leistungsbetrag gemäß dem empfangenen Reduktionsbefehl erreicht wird. Der Begriff der temporären Reduktion der Ladeleistung ist weit zu verstehen und kann neben einer temporären Verkleinerung der Ladeleistung auf einen Wert größer Null auch das temporäre Aussetzen des Ladevorgangs, d. h. das Setzen der Ladeleistung auf Null umfassen. Ebenso kann die Reduktion der Ladeleistung über ein Aussetzen des Ladevorgangs hinausgehen und zu einem temporären Entladen des entsprechenden Energiespeichers führen. Die Entladeleistung dieses temporären Entladens kann dabei als Leistungswert betrachtet werden, der zur Verminderung der Leistungsaufnahme beiträgt. Das oder die soeben definierten vorgegebenen Fahrzeuge sind solche Fahrzeuge aus der Gruppe, für welche eine Teilnahme an dem Leistungsreduktionsvorgang zugelassen ist, d.h. deren Teilnahme ist nicht (z.B. durch einen Nutzer) gesperrt. Im Rahmen des Leistungsreduktionsvorgangs kann dabei eine Abweichung von dem oder den vorab festgelegten Parametern des Ladevorgangs der vorgegebenen Fahrzeuge erlaubt sein. In der Regel werden bei der Ermittlung des Reduktionsschemas jedoch Rechenvorschriften verwendet, welche eine Abweichung der Parameter und damit die Auswirkungen für den Nutzer möglichst gering halten. Hiermit kann eine effizientere und/oder einfachere Steuerung des Ladevorgangs erreicht werden.

Gemäß einer weiteren, vorteilhaften Ausgestaltung kann das vorgegebene Kriterium dabei derart festgelegt werden, dass es dann erfüllt ist, wenn die Einhaltung des oder der Parameter des veränderten Ladevorgangs die temporäre Reduktion der Ladeleistung des Ladevorgangs des Energiespeichers des zumindest einen vorgegebenen Fahrzeugs gemäß dem Reduktionsschema nicht verkürzt. Hiermit kann eine effizientere und/oder flexiblere Steuerung des Ladevorgangs erreicht werden.

Gemäß einer weiteren, vorteilhaften Ausgestaltung kann, falls das vorgegebene Kriterium nicht erfüllt ist, von dem zentralen Steuersystem ein neues Reduktionsschema basierend auf dem Leistungsbetrag des empfangenen Reduktionsbefehls ohne Teilnahme des zumindest einen vorgegebenen Fahrzeugs ermittelt werden, woraufhin durch das zentrale Steuersystem der Leistungsreduktionsvorgang gemäß dem neuen Reduktionsschema begonnen wird. Hiermit kann eine effizientere und/oder flexiblere Steuerung des Ladevorgangs erzielt werden.

Je nach Ausgestaltung des erfindungsgemäßen Verfahrens können die von einem Nutzer veränderbaren Parameter eines Ladevorgangs des Energiespeichers eines jeweiligen Fahrzeugs einen oder mehrere der folgenden Parameter umfassen:
- ein Zeitfenster, in dem der Energiespeicher des jeweiligen Fahrzeugs zu laden ist, beispielsweise ein Zeitfenster, in dem die Stromkosten gering sind, wobei auch das Laden außerhalb des Zeitfensters nicht ausgeschlossen ist;
- einen Leistungswert, mit dem der Energiespeicher des jeweiligen Fahrzeugs zu laden ist, und/oder einen maximalen Leistungswert, mit dem der Energiespeicher des jeweiligen Fahrzeugs maximal geladen werden soll;
- eine Abfahrtszeit des jeweiligen Fahrzeugs, wobei zur Abfahrtszeit ein vorgegebener Sollladezustand des Energiespeichers des jeweiligen Fahrzeugs zu erreichen ist;
- eine Information über eine Vorkonditionierung, welche eine von dem jeweiligen Fahrzeug benötigte Menge an elektrischer Energie vor Erreichen eines Abfahrtszeitpunkts festlegt, z.B. eine Energiemenge einer Heizung oder einer Klimaanlage, die vor dem Abfahrtszeitpunkt aktiviert werden soll;
- eine Information, wonach das Laden des Energiespeichers des jeweiligen Fahrzeugs bei Anschluss des Fahrzeugs an das Stromnetz sofort begonnen und bis zum Erreichen eines Sollladezustands fortgesetzt werden soll;
- einen Sollladezustand, der bis zu einem Abfahrtszeitpunkt des jeweiligen Fahrzeugs zu erreichen ist oder bis zu dem das jeweilige Fahrzeug ohne Spezifikation eines Abfahrtszeitpunkts maximal lädt.

In einer weiteren Ausführungsform des erfindungsgemäßen Verfahrens wird im Falle, dass das vorgegebene Kriterium erfüllt ist, durch das Steuersystem ferner sichergestellt, dass der Leistungsreduktionsvorgang gemäß dem Reduktionsschema unter Teilnahme des zumindest einen vorgegebenen Fahrzeugs an dem Leistungsreduktionsvorgang und unter Einhaltung des oder der Parameter des veränderten Ladevorgangs nicht mehr (automatisch) durch das zentrale Steuersystem derart manipuliert wird, dass der veränderte Ladevorgang nochmals verändert wird. Mit dieser Variante der Erfindung wird erreicht, dass der Wunsch des Nutzers im Hinblick auf eine Parameterveränderung immer eingehalten wird.

In einer weiteren bevorzugten Ausführungsform des erfindungsgemäßen Verfahrens berücksichtigt das zentrale Steuersystem bei der Überprüfung, ob das vorgegebene Kriterium erfüllt ist, einen Puffer, der eine Ladeeffizienz des Energiespeichers des zumindest einen vorgegebenen Fahrzeugs annimmt, welche gegenüber einer erwarteten Ladeeffizienz vermindert ist, um zu verhindern, dass die Verminderung der Leistungsaufnahme der Gruppe von Fahrzeugen gemäß dem Reduktionsschema unter Teilnahme des zumindest einen vorgegebenen Fahrzeugs an dem Leistungsreduktionsvorgang und unter Einhaltung des oder der Parameter des veränderten Ladevorgangs geringer als der Leistungsbetrag gemäß dem empfangenen Reduktionsbefehl ist. Auf diese Weise werden etwaige Schwankungen beim Laden derart berücksichtigt, dass auch bei Auftreten dieser Schwankungen die Vorgabe einer Leistungsverminderung um den Leistungsbetrag des Reduktionsbefehls erfüllt ist.

In einer bevorzugten Variante berücksichtigt das zentrale Steuersystem bei jeder Ermittlung eines Reduktionsschemas einen Puffer, der eine Ladeeffizienz des Energiespeichers der jeweiligen vorgegebenen Fahrzeuge annimmt, welche gegenüber einer erwarteten Ladeeffizienz vermindert ist, um zu verhindern, dass der Verminderung der Leistungsaufnahme der Gruppe von Fahrzeugen gemäß dem Reduktionsschema geringer als der Leistungsbetrag gemäß dem empfangenen Reduktionsbefehl ist.

In einer weiteren Ausführungsform des erfindungsgemäßen Verfahrens ist an das Stromnetz ein stationäres Energiespeichersystem angeschlossen. Dieses stationäre Energiespeichersystem ist vorzugsweise ein stationärer Batteriespeicher und wird durch das zentrale Steuersystem derart angesteuert, dass im Falle, dass die Verminderung der Leistungsaufnahme der Gruppe von Fahrzeugen um den Leistungsbetrag gemäß dem Reduktionsbefehl nicht ausschließlich durch die temporäre Reduktion der Ladeleistung des Energiespeichers von vorgegebenen Fahrzeugen der Gruppe erreicht werden kann, die Leistungsaufnahme des stationären Energiespeichersystems aus dem Stromnetz verringert oder die Leistungsabgabe des stationären Energiespeichersystems in das Stromnetz erhöht wird, so dass die Verminderung der Leistungsaufnahme der Gruppe von Fahrzeugen, die durch temporäre Reduktion der Ladeleistung des Ladevorgangs des Energiespeichers von vorgegebenen Fahrzeugen der Gruppe erreicht wird, zuzüglich des Betrags der Verringerung der Leistungsaufnahme oder der Erhöhung der Leistungsabgabe des stationären Energiespeichersystems dem Leistungsbetrag gemäß dem Reduktionsbefehl entspricht. Mit dieser Variante der Erfindung wird eine unzureichende Leistungsverminderung von fahrzeugseitigen Energiespeichern über ein stationäres Energiespeichersystem ausgeglichen.

In einer weiteren Variante des erfindungsgemäßen Verfahrens ist eine jeweilige Benutzerschnittstelle, über welche ein Nutzer eines jeweiligen Fahrzeugs zumindest einen Teil der Parameter des Ladevorgangs verändern kann, Teil eines mobilen (d.h. tragbaren) Geräts, wie z.B. eines Mobiltelefons, eines Tablets oder eines Laptops. Ebenso kann die Benutzerschnittstelle in dem jeweiligen Fahrzeug integriert sein. Auf diese Weise kann der Nutzer flexibel an beliebigen Orten bzw. im Fahrzeug seine Präferenzen bezüglich der Ladung des fahrzeugseitigen Energiespeichers anpassen.

Neben dem oben beschriebenen Verfahren betrifft die Erfindung ein zentrales Steuersystem zur Steuerung des elektrischen Ladens einer Gruppe von Fahrzeugen, welche elektrisch an ein Stromnetz eines Stromnetzbetreibers angeschlossen sind, wobei die jeweiligen Fahrzeuge Strom zum Laden eines fahrzeugseitigen Energiespeichers zum Antrieb des jeweiligen Fahrzeugs beziehen. Dabei sind ein oder mehrere einzuhaltende Parameter des Ladevorgangs des Energiespeichers der jeweiligen Fahrzeuge festgelegt und der Nutzer eines jeweiligen Fahrzeugs kann über eine jeweilige Benutzerschnittstelle zumindest einen Teil dieser Parameter verändern. Das zentrale Steuersystem kann mit den jeweiligen Fahrzeugen sowie mit einem Server des Stromnetzbetreibers kommunizieren. Das zentrale Steuersystem ist derart ausgestaltet, dass es das erfindungsgemäße Verfahren bzw. eine oder mehrere bevorzugte Varianten des erfindungsgemäßen Verfahrens ausführen kann.

Ausführungsbeispiele der Erfindung werden nachfolgend anhand der beigefügten Figuren detailliert beschrieben.

Es zeigen:
- Fig. 1: eine schematische Darstellung einer Infrastruktur, in der eine Ausführungsform des erfindungsgemäßen Verfahrens durchgeführt wird; und
- Fig. 2 und Fig. 3: jeweilige Diagramme, welche beispielhaft Szenarien zeigen, in denen das erfindungsgemäße Verfahren zur Anwendung kommt.

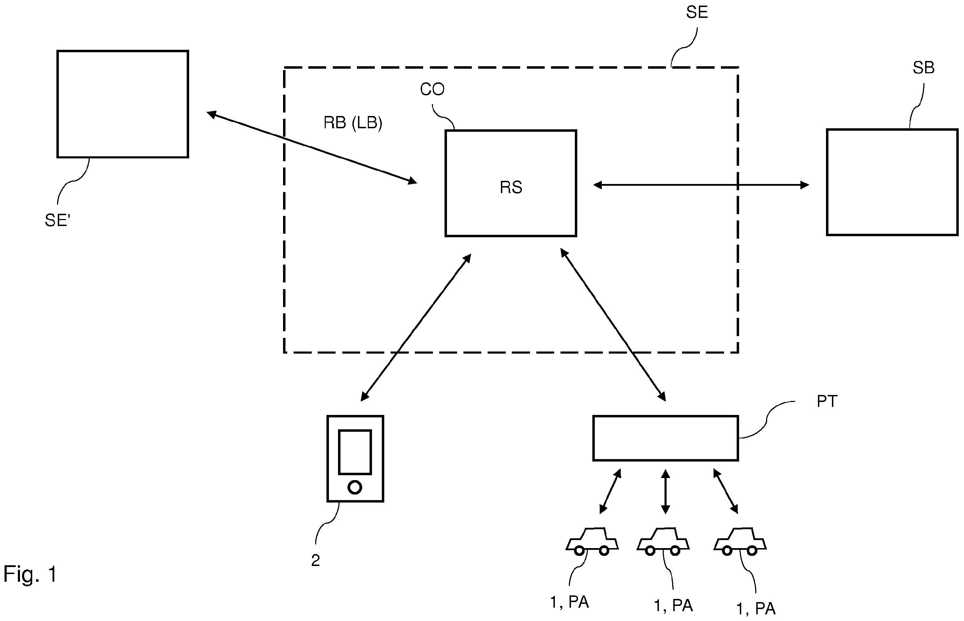

In Fig. 1 ist in schematischer Darstellung eine Infrastruktur zur Durchführung des erfindungsgemäßen Verfahrens dargestellt. Ein Kernbestandteil dieser Infrastruktur ist eine zentrale Steuereinheit CO, welche in einem Server SE integriert ist und zur Steuerung des Ladens einer Flotte aus mehreren elektrisch angetriebenen Fahrzeugen (d.h. der Antriebsbatterien dieser Fahrzeuge) dient. Gegebenenfalls kann die zentrale Steuereinheit auch aus mehreren parallel arbeitenden Servern/Modulen/Instanzen bestehen, welche sich an unterschiedlichen Orten befinden, um einen sog. "Single Point of Failure" zu vermeiden. Beispielhaft sind aus dieser Fahrzeugflotte drei Elektrofahrzeuge 1 wiedergegeben. Diese Fahrzeuge sind kommunikationstechnisch über ein Portal PT an die Steuereinheit CO angebunden. Ferner sind die Fahrzeuge 1 an ein Stromnetz (nicht gezeigt) angebunden, um hierüber deren Antriebsbatterien zu laden. Das Steuersystem CO hat über ein geeignetes Steuer-Backend (nicht gezeigt) Zugriff auf das Portal PT, welches wiederum mit den einzelnen Fahrzeugen 1, z.B. über SMS, kommunizieren kann. Mittels des Kommunikationswegs über das Portal PT kann die Steuereinheit CO an die einzelnen Fahrzeuge 1 Befehle zum temporären Aussetzen ihres Ladevorgangs basierend auf dem weiter unten beschriebenen Reduktionsschema RS übermitteln. Gegebenenfalls können auch Befehle zur Verkleinerung der Ladeleistung auf einen Wert größer Null oder zur Durchführung eines Entladevorgangs verarbeitet werden, wobei diese Art von Befehlen im Folgenden nicht betrachtet werden.

In den einzelnen Fahrzeugen 1 sind jeweils Parameter hinterlegt, welche allgemein mit dem Bezugszeichen PA bezeichnet sind. Die Parameter betreffen die in den einzelnen Fahrzeugen durchzuführenden Ladevorgänge und sollen beim Laden der Fahrzeuge möglichst eingehalten werden. Die Parameter PA stehen auch dem Steuersystem CO zur Verfügung. Zum Beispiel können die Parameter über das Portal PT an das Steuersystem CO übertragen worden sein.

Zu jedem einzelnen Fahrzeug 1 gehört ein Nutzer, der über ein Smartphone 2 verfügt, wobei aus Übersichtlichkeitsgründen nur ein einzelnes Smartphone angedeutet ist. Mit diesem Smartphone kann der Nutzer zum einen über das nicht gezeigte Steuer-Backend mit dem Steuersystem CO und zum anderen über das Portal PT mit seinem Fahrzeug kommunizieren. Insbesondere kann der Nutzer die Parameter PA des Ladevorgangs seines Fahrzeugs am Smartphone verändern, wobei diese Information zum einen an das Steuersystem CO und zum anderen an das jeweilige Fahrzeug weitergegeben wird.

In der hier beschriebenen Variante der Erfindung kann der Nutzer als Parameter PA unter anderem festlegen, zu welchem zukünftigen Abfahrtszeitpunkt das Fahrzeug in Betrieb genommen werden soll und wie der Sollladezustand der Antriebsbatterie zu diesem Abfahrtszeitpunkt sein soll. Gegebenenfalls kann der Benutzer auch ein sog. "Sofort-Laden" spezifizieren, bei dem das Fahrzeug unmittelbar nach Anschluss an das Stromnetz bis zu einem vorbestimmten Sollladezustand ununterbrochen geladen werden soll, wobei in diesem Fall kein Abfahrtszeitpunkt spezifiziert werden muss. Gegebenenfalls kann der Nutzer auch eine sog. Vorkonditionierung als Parameter festlegen. Bei dieser Vorkonditionierung wird eine von dem Fahrzeug benötigte Menge an elektrischer Energie vor Erreichen des Abfahrtszeitpunkts spezifiziert. Die Energiemenge wird z.B. für die Heizung oder die Klimaanlage des Kraftfahrzeugs benötigt, welche vor dem Abfahrtszeitpunkt bereits aktiviert werden soll.

Das Steuersystem CO kommuniziert gemäß Fig. 1 auch mit einem Server SE', der zu einem Stromnetzbetreiber gehört, an dessen Stromnetz die Fahrzeuge 1 der Fahrzeugflotte bzw. deren Batterien geladen werden. Darüber hinaus ist in der Infrastruktur der Fig. 1 ein Energiespeichersystem in der Form eines stationären Batteriespeichers SB vorgesehen, der über das Steuersystem CO mittels einer geeigneten Schnittstelle ansteuerbar ist und zu dem Betreiber des Steuersystems CO gehört. Der Betreiber des Steuersystems ist z.B. der Hersteller der Fahrzeuge 1 der Fahrzeugflotte.

Ein Ziel der Infrastruktur der Fig. 1 besteht darin, dass der Stromnetzbetreiber über seinen Server SE' Reduktionsbefehle RB an das Steuersystem CO im Falle von Überlast in seinem Stromnetz schicken kann, woraufhin das Steuersystem in geeigneter Weise das Laden zumindest eines Teils der gerade ladenden Fahrzeuge 1 für eine vorgegebene Aussetz-Zeitspanne aussetzt, um hierdurch die Last im Stromnetz zu reduzieren. Die Aussetz-Zeitspanne ist in der hier beschriebenen Ausführungsform fest vorgegeben und liegt bei einer Stunde.

In dem Reduktionsbefehl RB, der von dem Server SE' an das Steuersystem CO übermittelt wird, ist ein Leistungsbetrag LB festgelegt, um den mittels des Steuersystems CO die Leistungsabgabe aus dem Stromnetz zu den ladenden Fahrzeugen 1 zu vermindern ist. Basierend auf diesem Leistungsbetrag LB ermittelt das Steuersystem CO ein Reduktionsschema RS, welches angibt, für welche der Fahrzeuge 1 der Ladevorgang temporär ausgesetzt werden soll. Anschließend wird der Leistungsreduktionsvorgang gemäß dem Reduktionsschema durch die Steuereinheit CO ausgeführt, welche entsprechende Befehle an die einzelnen Fahrzeuge gibt, deren Ladevorgang dann unterbrochen wird. In diesem Sinne wird ein Leistungsreduktionsvorgang basierend auf dem Reduktionsschema RS mittels des Steuersystems CO durchgeführt. Bei diesem Leistungsreduktionsvorgang kann von den eigentlich einzuhaltenden Parametern PA der Ladevorgänge gegebenenfalls auch abgewichen werden, so dass unter Umständen Präferenzen des jeweiligen Nutzers des Fahrzeugs zeitweise nicht beachtet werden. Dies kann für den einzelnen Nutzer nachteilig sein. Deshalb kann der Nutzer z.B. über sein Smartphone 2 spezifizieren, dass er an Leistungsreduktionsvorgängen nicht teilnehmen will (Opt-out). Um den Nutzer jedoch dazu zu bringen, dass sein Fahrzeug an Leistungsreduktionsvorgängen trotz möglicher Nachteile teilnimmt, wird ein geeignetes Belohnungssystem verwendet, gemäß dem der Nutzer einen monetären Ausgleich erhält, wenn er an Leistungsreduktionsvorgängen teilnimmt.

Es kann nunmehr der Fall auftreten, dass die Parameter PA des Ladevorgangs eines Fahrzeugs, welches an einem bevorstehenden Leistungsreduktionsvorgang teilnimmt, durch den Nutzer kurzfristig verändert werden. Um dieser Veränderung Rechnung zu tragen, wird herkömmlicherweise dieses Fahrzeug nicht mehr in dem bevorstehenden Leistungsreduktionsvorgang berücksichtigt, was jedoch aufgrund der veränderten Anzahl von Fahrzeugen dazu führt, dass ein neues Reduktionsschema durch das Steuersystem CO berechnet werden muss. Darüber hinaus hat ein Nutzer, der kurzfristig entsprechende Parameter verändert, überhaupt keinen Anreiz, diese Parameterveränderung so auszugestalten, dass eine Teilnahme seines Fahrzeugs trotz veränderter Parameter an dem bevorstehenden Leistungsreduktionsvorgang weiterhin möglich ist. Dies ist dann der Fall, wenn mit dem bevorstehenden Leistungsreduktionsvorgang weiterhin trotz veränderter Parameter die Leistungsverminderung um den Leistungsbetrag LB erreicht werden kann.

Erfindungsgemäß ist nunmehr an eine Veränderung von Parametern des Ladevorgangs eines Fahrzeugs durch einen Nutzer nicht automatisch die Nicht-Teilnahme an den entsprechenden Leistungsreduktionsvorgang gekoppelt. Vielmehr wird durch das Steuersystem CO zunächst überprüft, ob unter Einhaltung der veränderten Parameter der Leistungsreduktionsvorgang gemäß dem Reduktionsschema RS unverändert ausgeführt werden kann, um die erwünschte Leistungsverminderung um den Leistungsbetrag LB des Reduktionsbefehls RB zu erreichen. Mit anderen Worten wird durch das Steuersystem überprüft, ob die Einhaltung der Parameter des veränderten Ladevorgangs das temporäre Aussetzen des Ladevorgangs gemäß dem Reduktionsschema für den Energiespeicher des Fahrzeugs mit den veränderten Parametern nicht verkürzt. Sollte es nicht zu einer solchen Verkürzung kommen, bleibt das entsprechende Fahrzeug mit den veränderten Parametern weiterhin am Leistungsreduktionsvorgang beteiligt und der Leistungsreduktionsvorgang wird gemäß dem Reduktionsschema RS durchgeführt. Wird hingegen das Aussetzen des Ladevorgangs für das Fahrzeug mit den veränderten Parametern verkürzt, berechnet das Steuersystem CO ein neues Reduktionsschema, und zwar ohne die Teilnahme des Fahrzeugs mit den veränderten Parametern. Auf diese Weise wird immer sichergestellt, dass eine Verminderung der aus dem Stromnetz entnommenen Leistung um den Leistungsbetrag des Reduktionsbefehls erreicht wird. Gleichzeitig werden jedoch auch die Wünsche der Nutzer betreffend eine Veränderung der Parameter eines Ladevorgangs geeignet berücksichtigt.

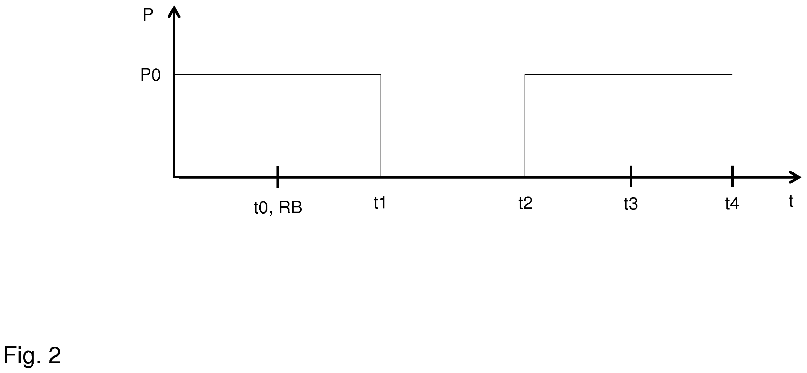

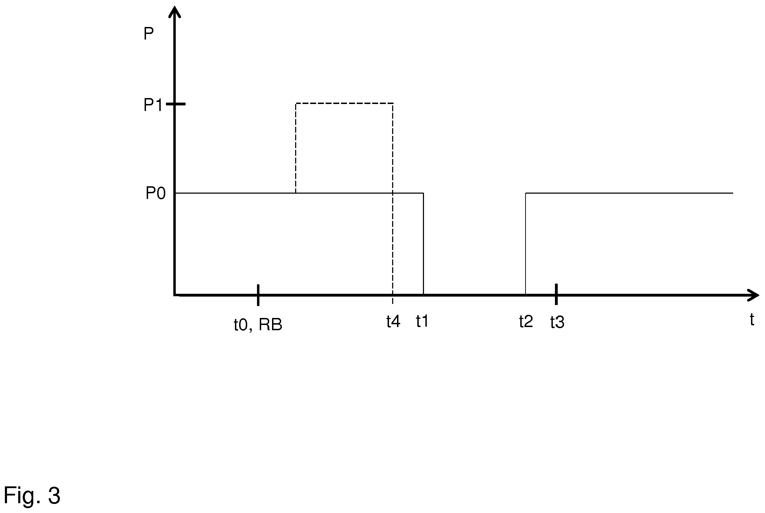

Fig. 2 und Fig. 3 zeigen zwei Szenarien, in denen das erfindungsgemäße Verfahren zum Einsatz kommt. In beiden Figuren ist ein Diagramm gezeigt, in dem entlang der Abszisse die Zeit t und entlang der Ordinate die Leistungsaufnahme P durch einen Energiespeicher eines solchen Fahrzeugs aus Fig. 1 angedeutet ist, für das Parameter seines Ladevorgangs durch einen Nutzer verändert werden.

Gemäß Fig. 2 war das Fahrzeug beim Anschluss an das Stromnetz in dem Zustand "Sofort-Laden". Demzufolge sollte das Fahrzeug mit dem Leistungswert P0 solange geladen werden, bis ein vorgegebener Sollladezustand seiner Antriebsbatterie erreicht ist. Zum Zeitpunkt t0 wurde in dem Steuersystem CO ein Reduktionsbefehl RB vom Server SE des Stromnetzbetreibers empfangen. Daraufhin ermittelt das Steuersystem ein Reduktionsschema zur Spezifikation des entsprechenden Ladereduktionsvorgangs. In der hier beschriebenen Ausführungsform ist der Ladevorgang des Fahrzeugs zwischen den Zeitpunkten t1 und t2 auszusetzen. Dies führt dazu, dass der Sollladezustand der Antriebsbatterie zum Zeitpunkt t3 erreicht wird. In der Zeitspanne zwischen t1 und t2 werden gleichzeitig auch die Ladevorgänge anderer Fahrzeuge ausgesetzt, so dass innerhalb der Zeitspanne eine Verminderung der Leistungsaufnahme der Gruppe von Fahrzeugen um den Leistungsbetrag LB gemäß dem Reduktionsbefehl RB erreicht wird.

Zu einem Zeitpunkt zwischen t0 und t1 verändert nunmehr der Nutzer die Parameter des Ladevorgangs dahingehend, dass er eine Abfahrtszeit t4 für sein Fahrzeug spezifiziert und ferner festlegt, dass das Fahrzeug auf jeden Fall in einem Ladezeitfenster geladen werden soll, das nach dem Zeitpunkt t2 beginnt und vor dem Zeitpunkt t3 endet. Das Steuersystem CO stellt nunmehr fest, dass das temporäre Aussetzen zwischen den Zeitpunkten t1 und t2 unter Einhaltung der veränderten Parameter des Ladevorgangs weiterhin durchgeführt werden kann, denn durch das temporäre Aussetzen zwischen t1 und t2 werden die Bedingungen eingehalten, dass im spezifizierten Ladezeitfenster geladen wird und der Sollladezustand zum Abfahrtszeitpunkt t4 erreicht ist. Das Fahrzeug mit dem veränderten Parameter nimmt somit weiterhin an dem Ladereduktionsvorgang teil. Dies wäre nicht der Fall, wenn die Abfahrtszeit so früh gesetzt worden wäre, dass der Sollladezustand zum Abfahrtszeitpunkt nur dann erreicht werden kann, wenn die Antriebsbatterie auch in dem Zeitfenster zwischen t1 und t2 geladen wird. In diesem Fall würde durch das Steuersystem ein neues Reduktionsschema ohne Teilnahme des Fahrzeugs mit den veränderten Parametern berechnet werden.

Das Diagramm der Fig. 3 zeigt ein ähnliches Szenario wie das Diagramm der Fig. 2. Das entsprechende Fahrzeug ist bei Anschluss an das Stromnetz wiederum in dem Zustand "Sofort-Laden". Zum Zeitpunkt t0 wird ein Reduktionsbefehl RB empfangen, woraufhin ein Reduktionsschema ermittelt wird, das zu einem temporären Aussetzen des Ladevorgangs des Fahrzeugs im Zeitraum zwischen t1 und t2 führt. Der Sollladezustand des Energiespeichers wird wieder zum Zeitpunkt t3 erreicht. Im Unterschied zu Fig. 2 wird in Fig. 3 zu einem Zeitpunkt zwischen t0 und t1 als Parameter der zum Laden verwendete Leistungswert verändert, der von dem Wert P0 auf den Wert P1 gesetzt wird, wie durch die gestrichelte Linie in Fig. 3 angedeutet ist. Mit anderen Worten wird im Zustand "Sofort-Laden" der Leistungswert, mit dem die Antriebsbatterie zu laden ist, hochgesetzt. Als Konsequenz ist das Fahrzeug bereits zum Zeitpunkt t4, der vor dem Zeitpunkt t1 liegt, mit dem erwünschten Sollladezustand geladen. Das Steuersystem CO stellt nunmehr wiederum fest, dass die Erhöhung des Leistungswerts auf P1 keinen negativen Einfluss auf das temporäre Aussetzen des Ladevorgangs hat, so dass das Fahrzeug am Leistungsreduktionsvorgang teilnehmen kann und das Reduktionsschema gemäß dem Diagramm der Fig. 3 für das entsprechende Fahrzeug angewendet werden kann. Dies wäre nicht der Fall, wenn der Zeitpunkt t4 nach dem Zeitpunkt t1 liegen würde, denn in diesem Fall müsste das Aussetzen des Ladevorgangs verkürzt werden, was wiederum dazu führt, dass die Leistungsaufnahme der Fahrzeuge um den Leistungsbetrag LB nicht durchgehend in der gesamten Zeitspanne zwischen t1 und t2 vermindert wird.

Der in Fig. 1 gezeigte stationäre Batteriespeicher SB wird in der hier beschriebenen Ausführungsform nur dann verwendet, wenn die durch den Befehl des Servers SE' spezifizierte Leistungsverminderung nicht durch die Batterien der Fahrzeuge des Fahrzeugpools abgedeckt werden kann. In diesem Fall wird über eine entsprechende Leistungsaufnahme aus dem Stromnetz bzw. Leistungsabgabe in das Stromnetz erreicht, dass sich die gewünschte Verminderung der Leistung in dem Stromnetz ergibt.

Die im Vorangegangenen beschriebenen Ausführungsformen der Erfindung weisen eine Reihe von Vorteilen auf. Insbesondere wird kontextabhängig durch das Steuersystem automatisch ermittelt, ob ein Fahrzeug mit veränderten Parametern seines Ladevorgangs an dem entsprechenden Ladereduktionsvorgang weiterhin teilnimmt. Es handelt sich in diesem Sinne um ein kontextabhängiges Opt-out, welches nicht explizit durch einen Nutzer durchgeführt werden muss. Bei Verwendung eines Belohnungssystems, bei dem ein Nutzer für die Teilnahme an einem Leistungsreduktionsvorgang belohnt wird, ermöglicht dieses Verfahren eine Stimulation des Nutzers dahingehend, dass er Parameter manuell derart verändert, dass er weiterhin an einem Leistungsreduktionsvorgang teilnimmt. Herkömmlicherweise wird der Nutzer bei jeder manuellen Veränderung der Parameter aus der Teilnahme am Leistungsreduktionsvorgang ausgeschlossen. Das erfindungsgemäße Verfahren stellt ferner sicher, dass manuell veränderte Parameter auch bei der weiteren Teilnahme des Fahrzeugs am Leistungsreduktionsvorgang eingehalten werden und somit dem Nutzerwunsch entsprochen wird.

### Bezugszeichenliste

- 1: Fahrzeuge
- 2: Smartphone
- CO: zentrales Steuersystem
- SE, SE': Server
- SB: stationärer Batteriespeicher
- PT: Portal
- RB: Reduktionsbefehl
- LB: Leistungsbetrag
- RS: Reduktionsschema
- t: Tageszeit
- t1, t2, ..., t4: Zeitpunkte
- P: Leistung
- P0, P1: Leistungswerte

## Patentansprüche

1. Verfahren zur Steuerung des elektrischen Ladens einer Gruppe von Fahrzeugen (1), welche elektrisch an ein Stromnetz eines Stromnetzbetreibers angeschlossen sind, wobei die jeweiligen Fahrzeuge (1) aus dem Stromnetz Strom zum Laden eines fahrzeugseitigen Energiespeichers zum Antrieb des jeweiligen Fahrzeugs (1) beziehen, wobei ein oder mehrere einzuhaltende Parameter (PA) des Ladevorgangs des Energiespeichers der jeweiligen Fahrzeuge (1) festgelegt sind und ein Nutzer eines jeweiligen Fahrzeugs (1) über eine jeweilige Benutzerschnittstelle zumindest einen Teil dieser Parameter (PA) verändern kann, wobei ein zentrales Steuersystem (CO) mit den jeweiligen Fahrzeugen (1) der Gruppe sowie mit einem Server (SE') des Stromnetzbetreibers kommunizieren kann, **dadurch gekennzeichnet, dass**
- das zentrale Steuersystem (CO) in Antwort auf einen empfangenen Reduktionsbefehl (RB) einen Leistungsreduktionsvorgang gemäß einem Reduktionsschema (RS) durchführt, wobei der Reduktionsbefehl (RB) vom Server (SE') des Stromnetzbetreibers stammt und einen Leistungsbetrag (LB) festlegt, um den die Leistungsaufnahme der Gruppe von Fahrzeugen (1) aus dem Stromnetz zu vermindern ist, und wobei das Reduktionsschema (RS) von dem zentralen Steuersystem (CO) basierend auf dem Leistungsbetrag (LB) des Reduktionsbefehls (RB) ermittelt wird und ein temporäres Aussetzen des Ladevorgangs des Energiespeichers von einem oder mehreren vorgegebenen Fahrzeugen (1) der Gruppe derart spezifiziert, dass die Verminderung der Leistungsaufnahme der Gruppe von Fahrzeugen (1) um den Leistungsbetrag (LB) gemäß dem empfangenen Reduktionsbefehl (RB) erreicht wird, wobei für das oder die vorgegebenen Fahrzeuge (1) eine Teilnahme an dem Leistungsreduktionsvorgang zugelassen ist und für den Leistungsreduktionsvorgang eine Abweichung von dem oder den Parametern (PA) des Ladevorgangs des oder der vorgegebenen Fahrzeuge (1) erlaubt ist;
- im Falle, dass nach Empfang des Reduktionsbefehls (RB) und vor oder während des Leistungsreduktionsvorgangs der Ladevorgang des Energiespeichers zumindest eines vorgegebenen Fahrzeugs (1) mittels Änderung zumindest eines seiner Parameter (P) durch den Nutzer verändert wird, durch das zentrale Steuersystem (CO) überprüft wird, ob ein vorgegebenes Kriterium erfüllt ist, wobei das vorgegebene Kriterium dann erfüllt ist, wenn die Einhaltung des oder der Parameter (PA) des veränderten Ladevorgangs das temporäre Aussetzen des Ladevorgangs des Energiespeichers des zumindest einen vorgegebenen Fahrzeugs (1) gemäß dem Reduktionsschema (RS) nicht verkürzt;
- im Falle, dass das vorgegebene Kriterium erfüllt ist, durch das zentrale Steuersystem (CO) der Leistungsreduktionsvorgang gemäß dem Reduktionsschema (RS) unter Teilnahme des zumindest einen vorgegebenen Fahrzeugs (1) an dem Leistungsreduktionsvorgang und unter Einhaltung des oder der Parameter (PA) des veränderten Ladevorgangs begonnen oder fortgesetzt wird und ansonsten von dem zentralen Steuersystem (CO) ein neues Reduktionsschema basierend auf dem Leistungsbetrag (LB) des Reduktionsbefehls (RB) ohne Teilnahme des zumindest einen vorgegebenen Fahrzeugs (1) ermittelt wird, woraufhin durch das zentrale Steuersystem (CO) der Leistungsreduktionsvorgang gemäß dem neuen Reduktionsschema begonnen wird.

2. Verfahren nach Anspruch 1, **dadurch gekennzeichnet, dass** die von einem Nutzer veränderbaren Parameter (PA) des Ladevorgangs des Energiespeichers eines jeweiligen Fahrzeugs (1) einen oder mehrere der folgenden Parameter umfassen:
- ein Zeitfenster, in dem der Energiespeicher des jeweiligen Fahrzeugs (1) zu laden ist;
- einen Leistungswert, mit dem der Energiespeicher des jeweiligen Fahrzeugs (1) zu laden ist, und/oder einen maximalen Leistungswert, mit dem der Energiespeicher des jeweiligen Fahrzeugs (1) maximal geladen werden soll;
- eine Abfahrtszeit des jeweiligen Fahrzeugs (1), wobei zur Abfahrtszeit ein vorgegebener Solladezustand des Energiespeichers des jeweiligen Fahrzeugs (1) zu erreichen ist;
- eine Information über eine Vorkonditionierung, welche eine von dem jeweiligen Fahrzeug (1) benötigte Menge an elektrischer Energie vor Erreichen eines Abfahrtszeitpunkts festlegt;
- eine Information, wonach das Laden des Energiespeichers des jeweiligen Fahrzeugs (1) bei Anschluss des Fahrzeugs an das Stromnetz sofort begonnen und bis zum Erreichen eines Sollladezustands fortgesetzt werden soll;
- einen Solladezustand, der bis zu einem Abfahrtszeitpunkt des jeweiligen Fahrzeugs zu erreichen ist oder bis zu dem das jeweilige Fahrzeug ohne Spezifikation eines Abfahrtszeitpunkts maximal lädt.

3. Verfahren nach einem der vorhergehenden Ansprüche, **dadurch gekennzeichnet, dass** im Falle, dass das vorgegebene Kriterium erfüllt ist, ferner sichergestellt wird, dass der Leistungsreduktionsvorgang gemäß dem Reduktionsschema (RS) unter Teilnahme des zumindest einen vorgegebenen Fahrzeugs (1) an dem Leistungsreduktionsvorgang und unter Einhaltung des oder der Parameter (PA) des veränderten Ladevorgangs nicht mehr durch das zentrale Steuersystem (CO) derart manipuliert wird, dass der veränderte Ladevorgang nochmals verändert wird.

4. Verfahren nach einem der vorhergehenden Ansprüche, **dadurch gekennzeichnet, dass** das zentrale Steuersystem (CO) bei der Überprüfung, ob das vorgegebene Kriterium erfüllt ist, einen Puffer berücksichtigt, der eine Ladeeffizienz des Energiespeichers des zumindest einen vorgegebenen Fahrzeugs (1) annimmt, welche gegenüber einer erwarteten Ladeeffizienz vermindert ist, um zu verhindern, dass die Verminderung der Leistungsaufnahme der Gruppe von Fahrzeugen (1) gemäß dem Reduktionsschema (RS) unter Teilnahme des zumindest einen vorgegebenen Fahrzeugs (1) an dem Leistungsreduktionsvorgang und unter Einhaltung des oder der Parameter (PA) des veränderten Ladevorgangs geringer als der Leistungsbetrag (LB) gemäß dem empfangenen Reduktionsbefehl (RB) ist.

5. Verfahren nach einem der vorhergehenden Ansprüche, **dadurch gekennzeichnet, dass** an das Stromnetz ein stationäres Energiespeichersystem (SB) angeschlossen ist, das durch das zentrale Steuersystem (CO) derart gesteuert wird, dass im Falle, dass die Verminderung der Leistungsaufnahme der Gruppe von Fahrzeugen (1) um den Leistungsbetrag (LB) gemäß dem Reduktionsbefehl (RB) nicht ausschließlich durch temporäres Aussetzen des Ladevorgangs des Energiespeicher von vorgegebenen Fahrzeugen (1) der Gruppe erreicht werden kann, die Leistungsaufnahme des stationären Energiespeichersystems (SB) aus dem Stromnetz verringert oder die Leistungsabgabe des stationären Energiespeichersystems (SB) in das Stromnetz erhöht wird, so dass die Verminderung der Leistungsaufnahme der Gruppe von Fahrzeugen (1), die durch temporäres Aussetzen des Ladevorgangs des Energiespeichers von vorgegebenen Fahrzeugen (1) der Gruppe erreicht wird, zuzüglich des Betrags der Verringerung der Leistungsaufnahme oder der Erhöhung der Leistungsabgabe des stationären Energiespeichersystems (SB) dem Leistungsbetrag (LB) gemäß dem Reduktionsbefehl (RB) entspricht.

6. Verfahren nach einem der vorhergehenden Ansprüche, **dadurch gekennzeichnet, dass** eine jeweilige Benutzerschnittstelle, über welche ein Nutzer eines jeweiligen Fahrzeugs (1) zumindest einen Teil der Parameter (PA) des Ladevorgangs verändern kann, Teil eines mobilen Geräts ist oder in dem jeweiligen Fahrzeug (1) integriert ist.

7. Zentrales Steuersystem zur Steuerung des elektrischen Ladens einer Gruppe von Fahrzeugen (1), welche elektrisch an ein Stromnetz eines Stromnetzbetreibers angeschlossen sind, wobei die jeweiligen Fahrzeuge (1) Strom zum Laden eines fahrzeugseitigen Energiespeichers zum Antrieb des jeweiligen Fahrzeugs (1) beziehen, wobei ein oder mehrere einzuhaltende Parameter (PA) des Ladevorgangs des Energiespeichers der jeweiligen Fahrzeuge (1) festgelegt sind und ein Nutzer eines jeweiligen Fahrzeugs (1) über eine jeweilige Benutzerschnittstelle zumindest einen Teil dieser Parameter (PA) verändern kann, wobei das zentrale Steuersystem (CO) mit den jeweiligen Fahrzeugen (1) sowie mit einem Server (SE') des Stromnetzbetreibers kommunizieren kann, **dadurch gekennzeichnet, dass** das zentrale Steuersystem derart ausgestaltet ist, dass
- das zentrale Steuersystem (CO) in Antwort auf einen empfangenen Reduktionsbefehl (RB) einen Leistungsreduktionsvorgang gemäß einem Reduktionsschema durchführt, wobei der Reduktionsbefehl vom Server (SE') des Stromnetzbetreibers stammt und einen Leistungsbetrag (LB) festlegt, um den die Leistungsaufnahme der Gruppe von Fahrzeugen (1) aus dem Stromnetz zu vermindern ist, und wobei das Reduktionsschema (RS) von dem zentralen Steuersystem (CO) basierend auf dem Leistungsbetrag (LB) des Reduktionsbefehl (RB) ermittelt wird und das temporäre Aussetzen des Ladevorgangs des Energiespeichers von einem oder mehreren vorgegebenen Fahrzeugen (1) der Gruppe derart spezifiziert, dass die Verminderung der Leistungsaufnahme der Gruppe von Fahrzeugen (1) um den Leistungsbetrag (LB) gemäß dem empfangenen Reduktionsbefehl (RB) erreicht wird, wobei für das oder die vorgegebenen Fahrzeuge (1) eine Teilnahme an dem Leistungsreduktionsvorgang zugelassen ist und für den Leistungsreduktionsvorgang eine Abweichung von dem oder den Parametern (PA) des Ladevorgangs des oder der vorgegebenen Fahrzeuge (1) erlaubt ist;
- im Falle, dass nach Empfang des Reduktionsbefehls (RB) und vor oder während des Leistungsreduktionsvorgangs der Ladevorgang des Energiespeichers zumindest eines vorgegebenen Fahrzeugs (1) mittels Änderung zumindest eines seiner Parameter (P) durch den Nutzer verändert wird, durch das zentrale Steuersystem (CO) überprüft wird, ob ein vorgegebenes Kriterium erfüllt ist, wobei das vorgegebene Kriterium dann erfüllt ist, wenn die Einhaltung des oder der Parameter (PA) des veränderten Ladevorgangs das temporäre Aussetzen des Ladevorgangs des Energiespeichers des zumindest einen vorgegebenen Fahrzeugs (1) gemäß dem Reduktionsschema (RS) nicht verkürzt;
- im Falle, dass das vorgegebene Kriterium erfüllt ist, durch das zentrale Steuersystem (CO) der Leistungsreduktionsvorgang gemäß dem Reduktionsschema (RS) unter Teilnahme des zumindest einen vorgegebenen Fahrzeugs (1) an dem Leistungsreduktionsvorgang und unter Einhaltung des oder der Parameter (PA) des veränderten Ladevorgangs des zumindest einen vorgegebenen Fahrzeugs (1) begonnen oder fortgesetzt wird und ansonsten von dem zentralen Steuersystem (CO) ein neues Reduktionsschema basierend auf dem Leistungsbetrag (LB) des Reduktionsbefehls (RB) ohne Teilnahme des zumindest einen vorgegebenen Fahrzeugs (1) ermittelt wird und durch das zentrale Steuersystem (CO) der Leistungsreduktionsvorgang gemäß dem neuen Reduktionsschema begonnen oder fortgesetzt wird.

8. Steuersystem nach Anspruch 7, **dadurch gekennzeichnet, dass** das Steuersystem zur Durchführung eines Verfahrens nach einem der Ansprüche 2 bis 6 eingerichtet ist.

## Claims

1. Method for controlling the electric charging process of a group of vehicles (1) which are electrically connected to a power supply system of a power supply system operator, wherein the respective vehicles (1) draw current from the power supply system for charging a vehicle-side energy storage device for driving the respective vehicle (1), wherein one or more parameters (PA) to be adhered to for the charging operation of the energy storage device of the respective vehicles (1) are defined, and a user of a respective vehicle (1) can alter at least some of these parameters (PA) using a respective user interface, wherein a central control system (CO) can communicate with the respective vehicles (1) in the group and with a server (SE') of the power supply system operator, **characterized in that**
- the central control system (CO) performs a power reduction operation in accordance with a reduction scheme (RS) in response to a received reduction command (RB), wherein the reduction command (RB) originates from the server (SE') of the power supply system operator and defines a power amount (LB) by which the power uptake of the group of vehicles (1) from the power supply system needs to be decreased, and wherein the reduction scheme (RS) is determined by the central control system (CO) on the basis of the power amount (LB) of the reduction command (RB) and specifies a temporary suspension of the charging operation of the energy storage device of one or more preset vehicles (1) in the group in such a way that the decrease in the power uptake of the group of vehicles (1) by the power amount (LB) in accordance with the received reduction command (RB) is achieved, wherein participation in the power reduction operation is permitted for the preset vehicle(s) (1), and a deviation from the parameter(s) (PA) of the charging operation of the preset vehicle (s) (1) is allowed for the power reduction operation;
- in the event that, after reception of the reduction command (RB) and prior to or during the power reduction operation, the charging operation of the energy storage device of at least one preset vehicle (1) is altered by the user by means of altering at least one of its parameters (P), a check is performed by the central control system (CO) to ascertain whether a preset criterion has been met, wherein the preset criterion has been met when the adherence to the parameter(s) (PA) of the altered charging operation does not shorten the temporary suspension of the charging operation of the energy storage device of the at least one preset vehicle (1) in accordance with the reduction scheme (RS);
- in the event that the preset criterion has been met, the power reduction operation in accordance with the reduction scheme (RS) with the participation of the at least one preset vehicle (1) in the power reduction operation and whilst adhering to the parameter(s) (PA) of the altered charging operation is begun or continued by the central control system (CO), and otherwise a new reduction scheme is determined by the central control system (CO) on the basis of the power amount (LB) of the reduction command (RB) without the participation of the at least one preset vehicle (1), whereupon the power reduction operation in accordance with the new reduction scheme is begun by the central control system (CO).

2. Method according to Claim 1, **characterized in that** the parameters (PA) of the charging operation of the energy storage device of a respective vehicle (1) which are alterable by a user include one or more of the following parameters:
- a time window in which the energy storage device of the respective vehicle (1) needs to be charged;
- a power value with which the energy storage device of the respective vehicle (1) needs to be charged, and/or a maximum power value with which the energy storage device of the respective vehicle (1) is intended to be maximally charged;
- a departure time of the respective vehicle (1), wherein a preset setpoint state of charge of the energy storage device of the respective vehicle (1) needs to be achieved at the departure time;
- information relating to preconditioning which defines a quantity of electrical energy required by the respective vehicle (1) before a departure time is reached;
- information in accordance with which charging of the energy storage device of the respective vehicle (1) is intended to be begun immediately on connection of the vehicle to the power supply system and continued until a setpoint state of charge is achieved;
- a setpoint state of charge which needs to be achieved by a departure time of the respective vehicle or up to which the respective vehicle charges maximally without specification of a departure time.

3. Method according to either of the preceding claims, **characterized in that** in the event that the preset criterion has been met, it is additionally ensured that the power reduction operation in accordance with the reduction scheme (RS) with the participation of the at least one preset vehicle (1) in the power reduction operation and whilst adhering to the parameter (s) (PA) of the altered charging operation is no longer manipulated by the central control system (CO) in such a way that the altered charging operation is altered again.

4. Method according to one of the preceding claims, **characterized in that** the central control system (CO), when performing a check to ascertain whether the preset criterion has been met, takes into consideration a buffer, which assumes a charging efficiency of the energy storage device of the at least one preset vehicle (1) which has been decreased in comparison with an expected charging efficiency in order to prevent the decrease in the power uptake of the group of vehicles (1) in accordance with the reduction scheme (RS) with the participation of the at least one preset vehicle (1) in the power reduction operation and whilst adhering to the parameter(s) (PA) of the altered charging operation being lower than the power amount (LB) in accordance with the received reduction command (RB).

5. Method according to one of the preceding claims, **characterized in that** a stationary energy storage device system (SB) is connected to the power supply system and is controlled by the central control system (CO) in such a way that in the event that the decrease in the power uptake of the group of vehicles (1) by the power amount (LB) in accordance with the reduction command (RB) cannot be achieved exclusively by a temporary suspension of the charging operation of the energy storage device of preset vehicles (1) in the group, the power uptake of the stationary energy storage device system (SB) from the power supply system is lowered or the power output of the stationary energy storage device system (SB) to the power supply system is increased, with the result that the decrease in the power uptake of the group of vehicles (1) which is achieved by a temporary suspension of the charging operation of the energy storage device of preset vehicles (1) in the group plus the amount by which the power uptake of the stationary energy storage device system (SB) is lowered or by which the power output of the stationary energy storage device system (SB) is increased corresponds to the power amount (LB) in accordance with the reduction command (RB).

6. Method according to one of the preceding claims, **characterized in that** a respective user interface by means of which a user of a respective vehicle (1) can alter at least some of the parameters (PA) of the charging operation is part of a mobile device or is integrated in the respective vehicle (1).

7. Central control system for controlling the electric charging process of a group of vehicles (1) which are electrically connected to a power supply system of a power supply system operator, wherein the respective vehicles (1) draw current for charging a vehicle-side energy storage device for driving the respective vehicle (1), wherein one or more parameters (PA) to be adhered to for the charging operation of the energy storage device of the respective vehicles (1) are defined, and a user of a respective vehicle (1) can alter at least some of these parameters (PA) using a respective user interface, wherein the central control system (CO) can communicate with the respective vehicles (1) and with a server (SE') of the power supply system operator, **characterized in that** the central control system is configured in such a way that
- the central control system (CO) performs a power reduction operation in accordance with a reduction scheme in response to a received reduction command (RB), wherein the reduction command originates from the server (SE') of the power supply system operator and defines a power amount (LB) by which the power uptake of the group of vehicles (1) from the power supply system needs to be decreased, and wherein the reduction scheme (RS) is determined by the central control system (CO) on the basis of the power amount (LB) of the reduction command (RB) and specifies the temporary suspension of the charging operation of the energy storage device of one or more preset vehicles (1) in the group in such a way that the decrease in the power uptake of the group of vehicles (1) by the power amount (LB) in accordance with the received reduction command (RB) is achieved, wherein participation in the power reduction operation is permitted for the preset vehicle(s) (1), and a deviation from the parameter(s) (PA) of the charging operation of the preset vehicle (s) (1) is allowed for the power reduction operation;
- in the event that, after reception of the reduction command (RB) and prior to or during the power reduction operation, the charging operation of the energy storage device of at least one preset vehicle (1) is altered by the user by means of altering at least one of its parameters (P), a check is performed by the central control system (CO) to ascertain whether a preset criterion has been met, wherein the preset criterion has been met when the adherence to the parameter(s) (PA) of the altered charging operation does not shorten the temporary suspension of the charging operation of the energy storage device of the at least one preset vehicle (1) in accordance with the reduction scheme (RS);
- in the event that the preset criterion has been met, the power reduction operation in accordance with the reduction scheme (RS) with the participation of the at least one preset vehicle (1) in the power reduction operation and whilst adhering to the parameter(s) (PA) of the altered charging operation of the at least one preset vehicle (1) is begun or continued by the central control system (CO), and otherwise a new reduction scheme is determined by the central control system (CO) on the basis of the power amount (LB) of the reduction command (RB) without the participation of the at least one preset vehicle (1), and the power reduction operation in accordance with the new reduction scheme is begun or continued by the central control system (CO).

8. Control system according to Claim 7, **characterized in that** the control system is designed to implement a method according to one of Claims 2 to 6.

## Revendications

1. Procédé de commande de la charge électrique d'un groupe de véhicules (1), lesquels sont raccordés électriquement à un réseau électrique d'un opérateur de réseau électrique, les véhicules (1) respectifs soutirant de l'électricité du réseau électrique pour la charge d'un accumulateur d'énergie côté véhicule en vue de la propulsion du véhicule (1) respectif, un ou plusieurs paramètres (PA) à respecter de l'opération de charge de l'accumulateur d'énergie du véhicule (1) respectif étant spécifiés et un utilisateur d'un véhicule (1) respectif pouvant modifier au moins une partie de ces paramètres (PA) par le biais d'une interface utilisateur respective, un système de commande central (CO) pouvant communiquer avec les véhicules (1) respectifs du groupe ainsi qu'avec un serveur (SE') de l'opérateur de réseau électrique, **caractérisé en ce que**
- le système de commande central (CO), en réponse à une instruction de réduction (RB) reçue, effectue une opération de réduction de puissance conformément à un schéma de réduction (RS), l'instruction de réduction (RB) émanant du serveur (SE') de l'opérateur de réseau électrique et spécifiant un montant de puissance (LB) duquel doit être réduite la puissance absorbée par le groupe de véhicules (1) du réseau électrique, et le schéma de réduction (RS) étant déterminé par le système de commande central (CO) en se basant sur le montant de puissance (LB) de l'instruction de réduction (RB) et spécifiant une suspension temporaire de l'opération de charge de l'accumulateur d'énergie d'un ou plusieurs véhicules (1) prédéfinis du groupe de telle sorte que la réduction de la puissance absorbée par le groupe de véhicules (1) du montant de puissance (LB) conformément à l'instruction de réduction (RB) reçue est atteinte, une participation à l'opération de réduction de puissance étant autorisée pour le ou les véhicules (1) prédéfinis et un écart par rapport au ou aux paramètres (PA) de l'opération de charge du ou des véhicules (1) prédéfinis étant autorisé pour l'opération de réduction de puissance ;
- dans le cas où, après la réception de l'instruction de réduction (RB) et avant ou pendant l'opération de réduction de puissance, l'opération de charge de l'accumulateur d'énergie d'au moins un véhicule (1) prédéfini est modifiée au moyen de la modification d'au moins l'un de ses paramètres (PA) par l'utilisateur, le système de commande central (CO) vérifie si un critère prédéfini est rempli, le critère prédéfini étant rempli lorsque le respect du ou des paramètres (PA) de l'opération de charge modifiée ne raccourcit pas la suspension temporaire de l'opération de charge de l'accumulateur d'énergie de l'au moins un véhicule (1) prédéfini conformément au schéma de réduction (RS) ;
- dans le cas où le critère prédéfini est rempli, l'opération de réduction de puissance est commencée ou poursuivie par le système de commande central (CO) conformément au schéma de réduction (RS) avec la participation de l'au moins un véhicule (1) prédéfini à l'opération de réduction de puissance et en respectant le ou les paramètres (PA) de l'opération de charge modifiée et, sinon, un nouveau schéma de réduction est déterminé par le système de commande central (CO) en se basant sur le montant de puissance (LB) de l'instruction de réduction (RB) sans la participation de l'au moins un véhicule (1) prédéfini, l'opération de réduction de puissance étant ensuite commencée par le système de commande central (CO) conformément au nouveau schéma de réduction.

2. Procédé selon la revendication 1, **caractérisé en ce que** les paramètres (PA) modifiables par un utilisateur de l'opération de charge de l'accumulateur d'énergie d'un véhicule (1) respectif comprennent un ou plusieurs des paramètres suivants :
- une fenêtre temporelle dans laquelle doit être chargé l'accumulateur d'énergie du véhicule (1) respectif ;
- une valeur de puissance avec laquelle doit être chargé l'accumulateur d'énergie du véhicule (1) respectif, et/ou une valeur de puissance maximale à laquelle doit être chargé l'accumulateur d'énergie du véhicule (1) respectif ;
- un moment de départ du véhicule (1) respectif, un état de charge de consigne de l'accumulateur d'énergie du véhicule (1) respectif devant être atteint au moment de départ ;
- une information à propos d'un conditionnement préalable, lequel spécifie une quantité d'énergie électrique requise par le véhicule (1) respectif avant d'atteindre un instant de départ ;
- une information selon laquelle la charge de l'accumulateur d'énergie du véhicule (1) respectif doit commencer immédiatement lors du raccordement du véhicule au réseau électrique et être poursuivie jusqu'à atteindre l'état de charge de consigne ;
- un état de charge de consigne qui doit être atteint jusqu'à un instant de départ du véhicule respectif et jusqu'auquel au maximum se charge le véhicule respectif sans spécification d'un instant de départ.

3. Procédé selon l'une des revendications précédentes, **caractérisé en ce que** dans le cas où le critère prédéfini est rempli, il est en outre garanti que l'opération de réduction de puissance conformément au schéma de réduction (RS) avec la participation de l'au moins un véhicule (1) prédéfini à l'opération de réduction de puissance et en respectant le ou les paramètres (PA) de l'opération de charge modifiée n'est plus manipulée par le système de commande central (CO) de telle sorte que l'opération de charge modifiée est encore une fois modifiée.

4. Procédé selon l'une des revendications précédentes, **caractérisé en ce que** le système de commande central (CO), lors de la vérification si le critère prédéfini est rempli, tient compte d'un tampon, lequel adopte une efficacité de charge de l'accumulateur d'énergie de l'au moins un véhicule (1) prédéfini, laquelle est réduite par rapport à une efficacité de charge attendue, afin d'éviter que la réduction de la puissance absorbée par le groupe de véhicules (1) conformément au schéma de réduction (RS) avec la participation de l'au moins un véhicule (1) prédéfini à l'opération de réduction de puissance et en respectant le ou les paramètres (PA) de l'opération de charge modifiée soit inférieure au montant de puissance (LB) conformément à l'instruction de réduction (RB) reçue.

5. Procédé selon l'une des revendications précédentes, **caractérisé en ce qu'**un système d'accumulateur d'énergie (SB) fixe est raccordé au réseau électrique, lequel est commandé par le système de commande central (CO) de telle sorte que dans le cas où la réduction de la puissance absorbée par le groupe de véhicules (1) du montant de puissance (LB) conformément à l'instruction de réduction (RB) ne peut pas être atteinte uniquement par une suspension temporaire de l'opération de charge de l'accumulateur d'énergie de véhicules (1) prédéfinis du groupe, la puissance absorbée par le système d'accumulateur d'énergie (SB) fixe du réseau électrique est réduite ou la puissance délivrée par le système d'accumulateur d'énergie (SB) fixe dans le réseau électrique est augmentée, de sorte que la réduction de la puissance absorbée par le groupe de véhicules (1), laquelle est atteinte par une suspension temporaire de l'opération de charge de l'accumulateur d'énergie de véhicules (1) prédéfinis du groupe, plus le montant de la réduction de la puissance absorbée ou l'augmentation de la puissance délivrée par le système d'accumulateur d'énergie (SB) fixe, correspond au montant de puissance (LB) conformément à l'instruction de réduction (RB).

6. Procédé selon l'une des revendications précédentes, **caractérisé en ce qu'**une interface utilisateur respective, par le biais de laquelle un utilisateur d'un véhicule (1) respectif peut modifier au moins une partie des paramètres (PA) de l'opération de charge, est une partie d'un appareil mobile ou est intégrée dans le véhicule (1) respectif.

7. Système de commande central pour commander la charge électrique d'un groupe de véhicules (1), lesquels sont raccordés électriquement à un réseau électrique d'un opérateur de réseau électrique, les véhicules (1) respectifs soutirant de l'électricité pour la charge d'un accumulateur d'énergie côté véhicule en vue de la propulsion du véhicule (1) respectif, un ou plusieurs paramètres (PA) à respecter de l'opération de charge de l'accumulateur d'énergie du véhicule (1) respectif étant spécifiés et un utilisateur d'un véhicule (1) respectif pouvant modifier au moins une partie de ces paramètres (PA) par le biais d'une interface utilisateur respective, le système de commande central (CO) pouvant communiquer avec les véhicules (1) respectifs ainsi qu'avec un serveur (SE') de l'opérateur de réseau électrique, **caractérisé en ce que** le système de commande central est configuré de telle sorte que
- le système de commande central (CO), en réponse à une instruction de réduction (RB) reçue, effectue une opération de réduction de puissance conformément à un schéma de réduction, l'instruction de réduction émanant du serveur (SE') de l'opérateur de réseau électrique et spécifiant un montant de puissance (LB) duquel doit être réduite la puissance absorbée par le groupe de véhicules (1) du réseau électrique, et le schéma de réduction (RS) étant déterminé par le système de commande central (CO) en se basant sur le montant de puissance (LB) de l'instruction de réduction (RB) et spécifiant la suspension temporaire de l'opération de charge de l'accumulateur d'énergie d'un ou plusieurs véhicules (1) prédéfinis du groupe de telle sorte que la réduction de la puissance absorbée par le groupe de véhicules (1) du montant de puissance (LB) conformément à l'instruction de réduction (RB) reçue est atteinte, une participation à l'opération de réduction de puissance étant autorisée pour le ou les véhicules (1) prédéfinis et un écart par rapport au ou aux paramètres (PA) de l'opération de charge du ou des véhicules (1) prédéfinis étant autorisé pour l'opération de réduction de puissance ;
- dans le cas où, après la réception de l'instruction de réduction (RB) et avant ou pendant l'opération de réduction de puissance, l'opération de charge de l'accumulateur d'énergie d'au moins un véhicule (1) prédéfini est modifiée au moyen de la modification d'au moins l'un de ses paramètres (PA) par l'utilisateur, le système de commande central (CO) vérifie si un critère prédéfini est rempli, le critère prédéfini étant rempli lorsque le respect du ou des paramètres (PA) de l'opération de charge modifiée ne raccourcit pas la suspension temporaire de l'opération de charge de l'accumulateur d'énergie de l'au moins un véhicule (1) prédéfini conformément au schéma de réduction (RS) ;
- dans le cas où le critère prédéfini est rempli, l'opération de réduction de puissance est commencée ou poursuivie par le système de commande central (CO) conformément au schéma de réduction (RS) avec la participation de l'au moins un véhicule (1) prédéfini à l'opération de réduction de puissance et en respectant le ou les paramètres (PA) de l'opération de charge modifiée de l'au moins un véhicule (1) prédéfini et, sinon, un nouveau schéma de réduction est déterminé par le système de commande central (CO) en se basant sur le montant de puissance (LB) de l'instruction de réduction (RB) sans la participation de l'au moins un véhicule (1) prédéfini et l'opération de réduction de puissance est commencée ou poursuivie par le système de commande central (CO) conformément au nouveau schéma de réduction.

8. Système de commande selon la revendication 7, **caractérisé en ce que** le système de commande et conçu pour mettre en œuvre un procédé selon l'une des revendications 2 à 6.
